# EUROPEAN PATENT APPLICATION

(11) **EP 4 071 698 A1**
(43) Date of publication of application: **12.10.2022**
(21) Application number: 20896069.0
(22) Date of filing: 04.12.2020
(51) Int. Cl.: G06Q 50/10, G06F 21/62

(54) **DATA ANALYSIS SYSTEM, AND DATA ANALYSIS METHOD**

(30) Priority: 05.12.2019 JP 2019220726
(71) Applicant: Hitachi, Ltd., Tokyo 100-8280 (JP)
(72) Inventor: KUMAGAI, Yoko, Tokyo 100-8280 (JP); KAJI, Tadashi, Tokyo 100-8280 (JP); TANI, Shigeyuki, Tokyo 100-8280 (JP); UCHIYAMA, Hiroki, Tokyo 100-8280 (JP); BASU, Anirban, Tokyo 100-8280 (JP); OTAHARA, Chiaki, Tokyo 100-8280 (JP)
(74) Representative: Mewburn Ellis LLP
(86) International application number: PCT/JP2020/045220
(87) International publication number: WO 2021/112216

(57) **Abstract**

A data analysis system (S) including a data analysis server (11), a data retention system (12) which retains data to be analyzed, and an analysis terminal (14). The data analysis server (11) sends to the data retention system (12), according to an analysis demand from the analysis terminal (14), an analysis request of the data based on a requirement to be satisfied by analysis of the data, and sends to the analysis terminal (14) an analysis result of the data based on the requirement received from the data retention system (12). The data retention system (12) analyzes the data based on the requirement according to the analysis request and sends an analysis result to the analysis terminal (14).

## Description

### TECHNICAL FIELD

The disclosed subject matter relates to a data analysis system and a data analysis method.

### BACKGROUND ART

In recent years, "data economy" of utilizing data generated by human behavior and corporate activities between companies and leveraging such data to improve competitiveness is expanding. The provision of new services by combining the data retained by one's own organization with the data held by other organizations, rather than just using one's own data, is being attempted.

Nevertheless, there are many cases where the data retained by organizations include "personal information" such as names and addresses, "sensitive information" such as political views, religious beliefs and insurance/medical information, "trade secret information" such as know-how of companies, and other information that needs to be managed securely (information including any one of the foregoing information to be kept confidential from those outside the organization is hereinafter referred to as the "confidential data"). Thus, it is difficult to provide data outside the organization and it is not possible to combine and analyze data between organizations, and this is a hindrance in realizing data economy.

In order to deal with the foregoing problem, conventionally, attempts have been made for anonymizing the data so that such data can be provided outside the organization, and combining and analyzing the anonymized data of multiple organizations. As the method of anonymization, for example, there is the method described in PTL 1.

Moreover, NPTL 1 describes a method in which, from the perspective of protecting personal information, a device referred to as a Databox is provided to an individual as a means for such individual to control the use of one's personal data, the Databox is used for performing processing such as aggregation of data, and collecting the data in a server in a state where the personal information has been deleted.

Furthermore, PTL 2 describes a method of dividing the data obtained with an input device such as a sensor into a plurality of data, sending each of the divided data to a different cloud server, performing statistical processing in each cloud server, collecting the results of the statistical processing in each cloud server in a statistical processing result providing service, and thereby performing overall statistical processing. As a result of dividing the data into a plurality of data, the confidentiality can be maintained even if data is divulged in one of the clouds.

### CITATION LIST

### PATENT LITERATURE

[PTL 1] Japanese Unexamined Patent Application Publication No. 2019-153060
[PTL 2] Japanese Unexamined Patent Application Publication No. 2015-158935

### NON-PATENT LITERATURE

[NPTL 1] Andy Crabtree et al., "Building accountability into the Internet of Things: the loT Databox model", [online], 27 January 2018, [searched on October 15, 2019], internet <URL: https://link.springer.com/article/10.1007/s40860-018-0054-5>

### SUMMARY OF THE INVENTION

### PROBLEMS TO BE SOLVED BY THE INVENTION

With PTL 1 described above, analysis in which the anonymized information is utilized between organizations can be performed. In the foregoing case, while analysis can be performed with anonymized information, PTL 1 does not in any way disclose how to perform a more detailed data analysis in a state where confidential data is included.

In NPTL 1 also, since the Databox deletes the personal information, the server will collect information that is equivalent to the anonymized information that does not contain personal information. In other words, even with the method of NPTL 1, it is not possible to perform analysis in a state where confidential data is included.

Similarly, in PTL 2 also, since the same effect as anonymization is yielded by dividing the data, it is not possible to perform analysis in a state where confidential data is included.

Accordingly, an object of the present invention is to realize analysis which utilizes data containing confidential data retained by each organization without having to provide such data outside each organization.

### MEANS TO SOLVE THE PROBLEMS

In order to achieve the foregoing object, the present invention provides, as one mode, a data analysis system including a data analysis server, a data retention system which retains data to be analyzed, and an analysis terminal, wherein the data analysis server sends to the data retention system, according to an analysis demand from the analysis terminal, an analysis request of the data based on a requirement to be satisfied by analysis of the data, and sends to the analysis terminal an analysis result of the data based on the requirement received from the data retention system, and the data retention system analyzes the data based on the requirement according to the analysis request and sends an analysis result to the analysis terminal.

### ADVANTAGEOUS EFFECTS OF THE INVENTION

According to the present invention, for example, it is possible to realize analysis which utilizes data containing confidential data retained by each organization without having to provide such data outside each organization.

### BRIEF DESCRIPTION OF DRAWINGS

[Fig. 1]

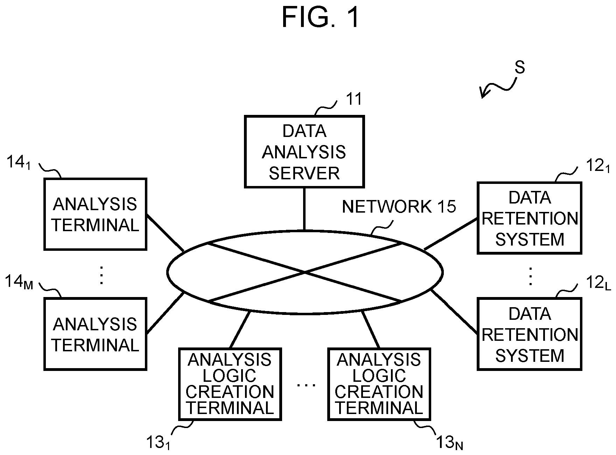

   Fig. 1 is a diagram illustrating a configuration of the data analysis system according to the first embodiment.
[Fig. 2]

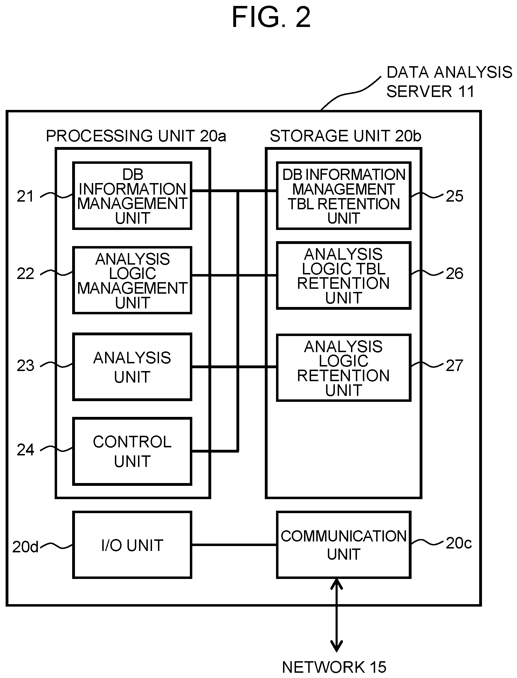

   Fig. 2 is a diagram illustrating an internal configuration of the data analysis server shown in Fig. 1.
[Fig. 3]

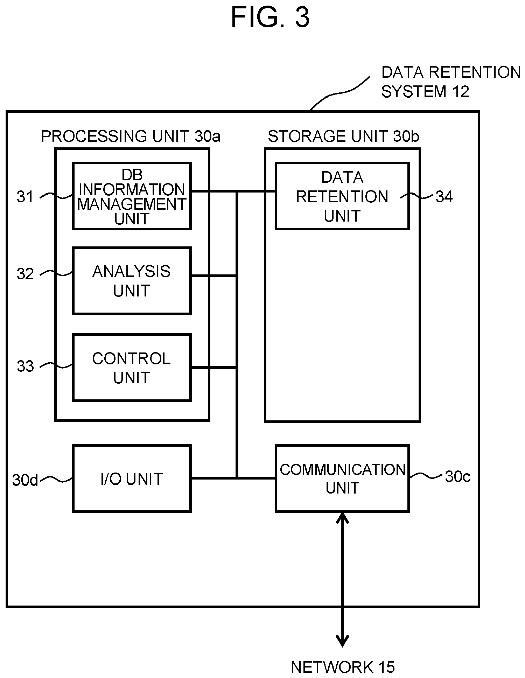

   Fig. 3 is a diagram illustrating an internal configuration of the data retention system shown in Fig. 1.
[Fig. 4]

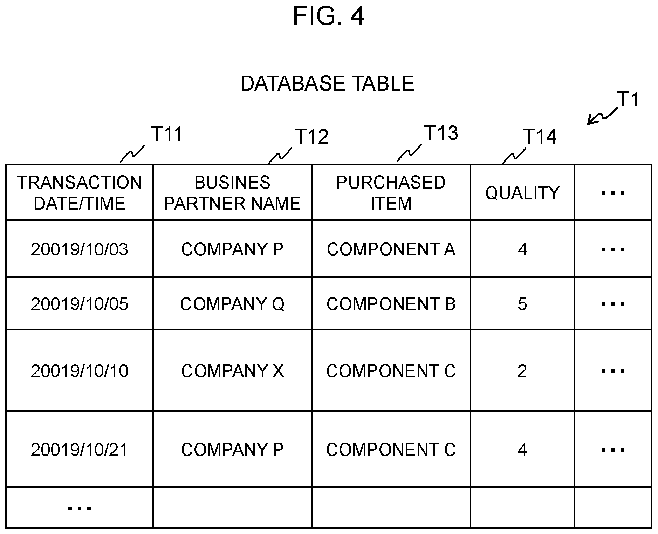

   Fig. 4 is a diagram illustrating the data retained by the data retention system.
[Fig. 5]

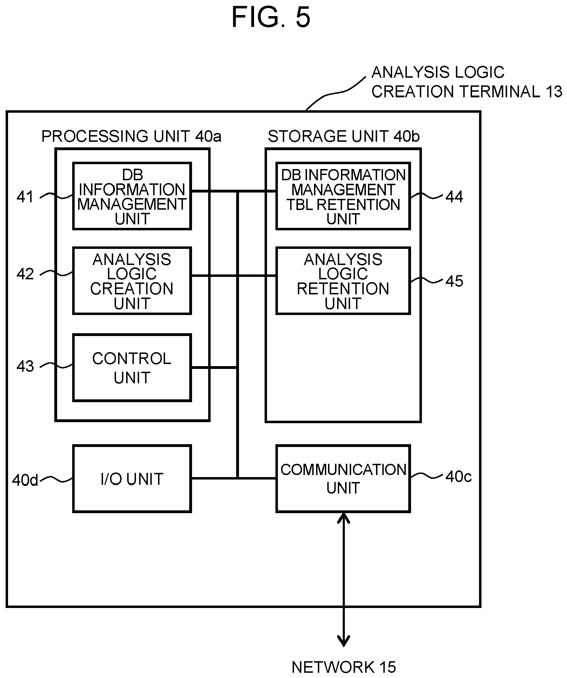

   Fig. 5 is a diagram illustrating an internal configuration of the analysis logic creation terminal shown in Fig. 1.
[Fig. 6]

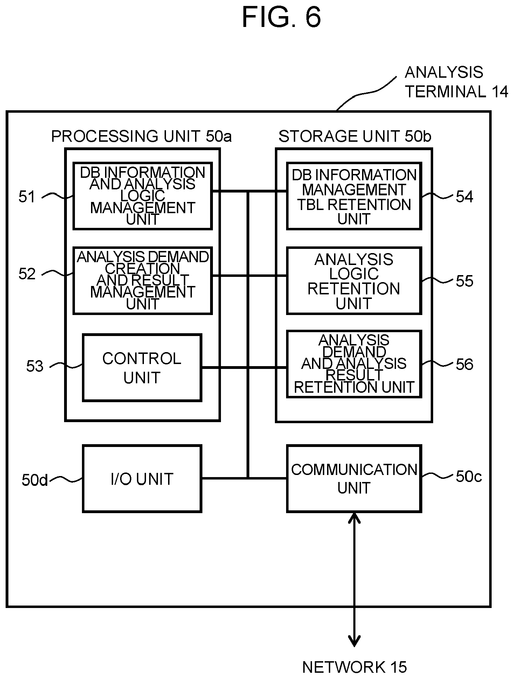

   Fig. 6 is a diagram illustrating an internal configuration of the analysis terminal shown in Fig. 1.
[Fig. 7]

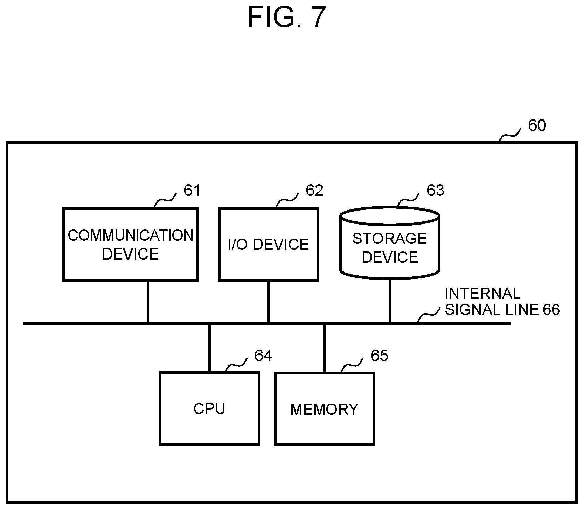

   Fig. 7 is a diagram illustrating a hardware configuration of the data analysis server, the data retention system, the analysis logic creation terminal, and the analysis terminal shown in Fig. 1.
[Fig. 8]

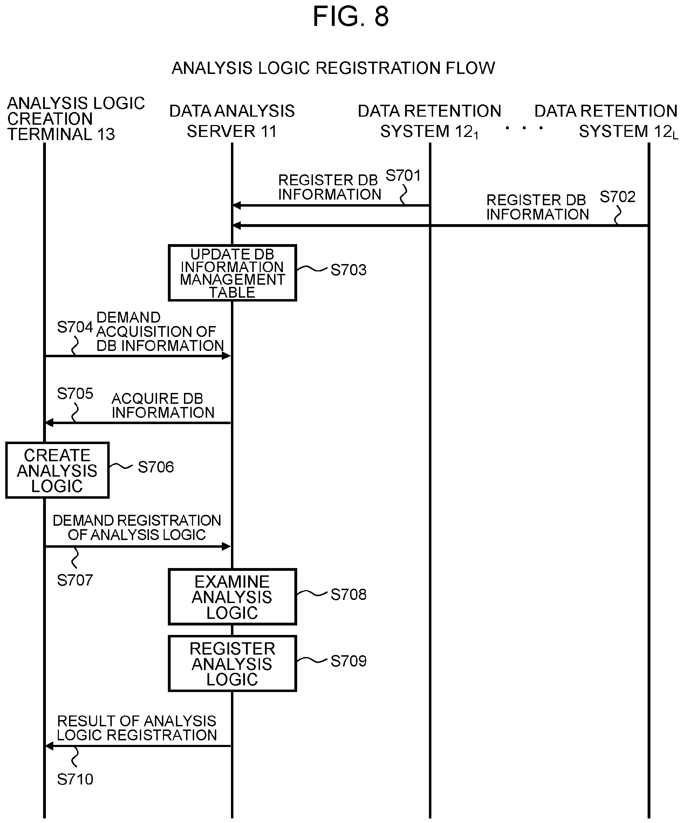

   Fig. 8 is a diagram illustrating an analysis logic registration flow according to the first embodiment.
[Fig. 9]

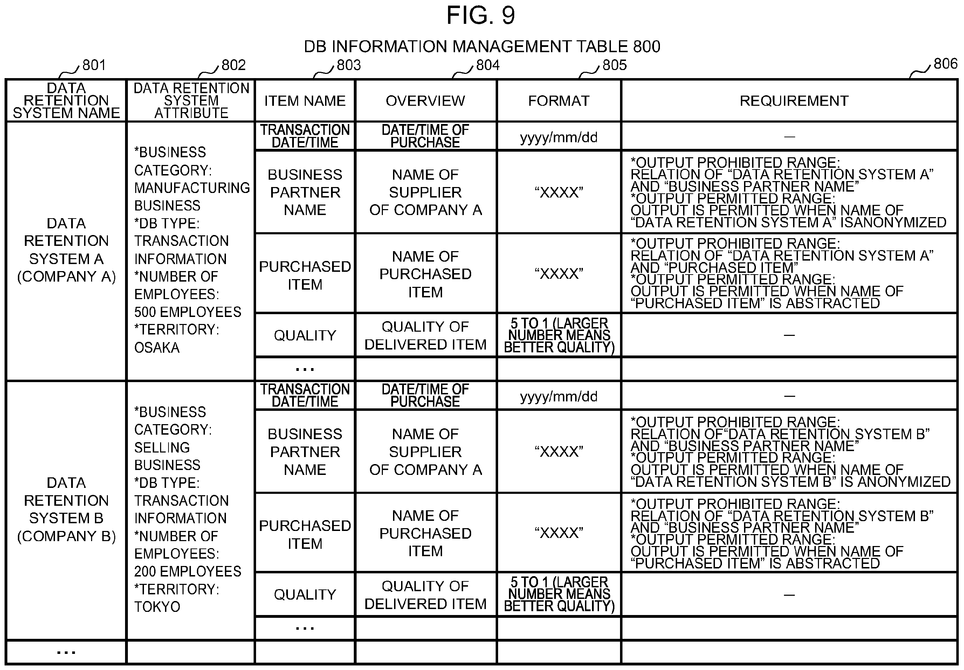

   Fig. 9 is a diagram illustrating a table configuration of the DB information management table retained by the data analysis server in the data analysis system according to the first embodiment.
[Fig. 10]

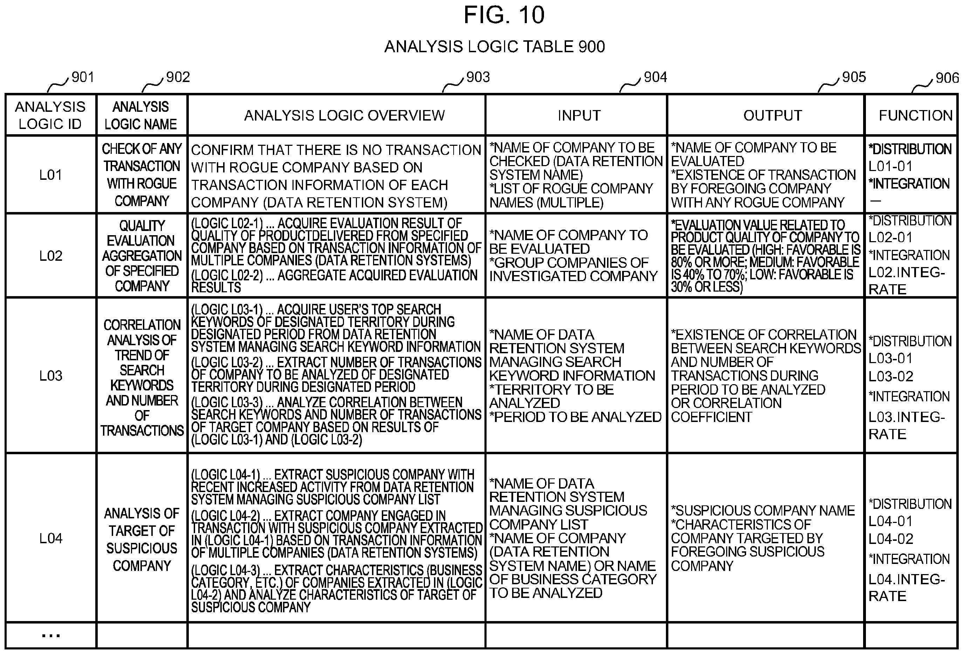

   Fig. 10 is a diagram illustrating a table configuration of the analysis logic table retained by the data analysis server in the data analysis system according to the first embodiment.
[Fig. 11]

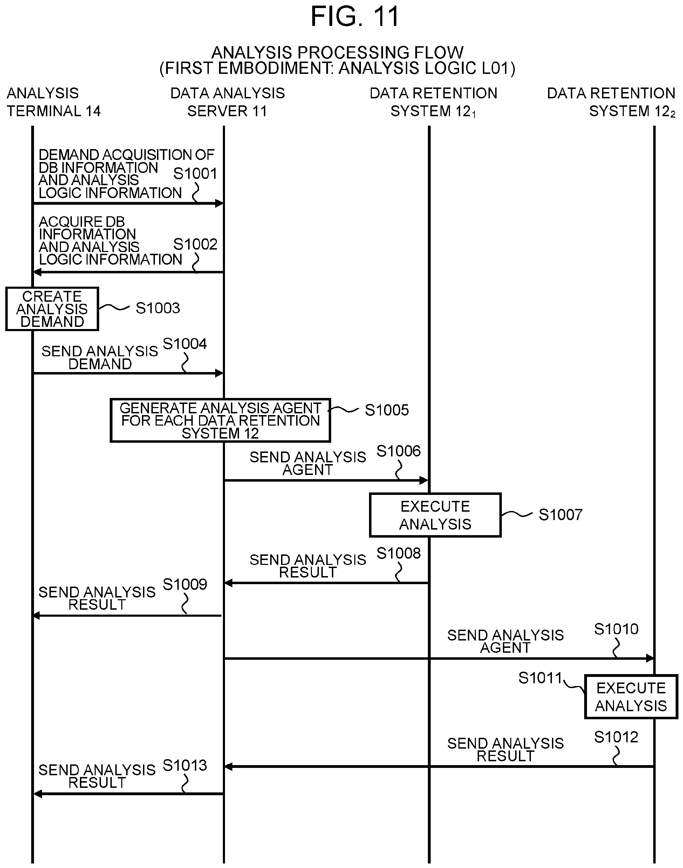

   Fig. 11 is a diagram illustrating a processing flow of the analysis step according to the first embodiment.
[Fig. 12]

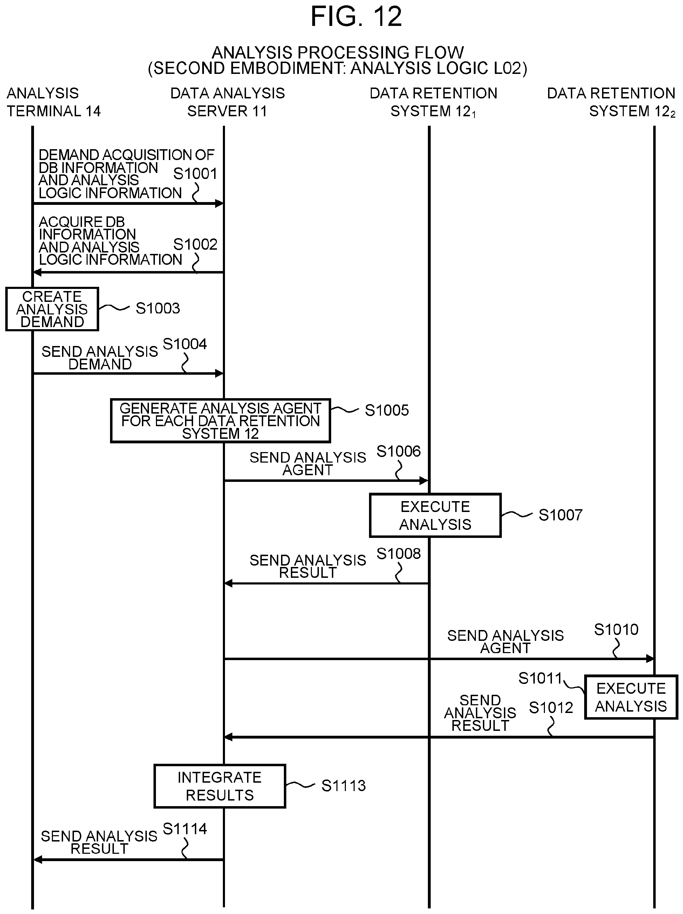

   Fig. 12 is a diagram illustrating a processing flow of the analysis step according to the second embodiment.
[Fig. 13]

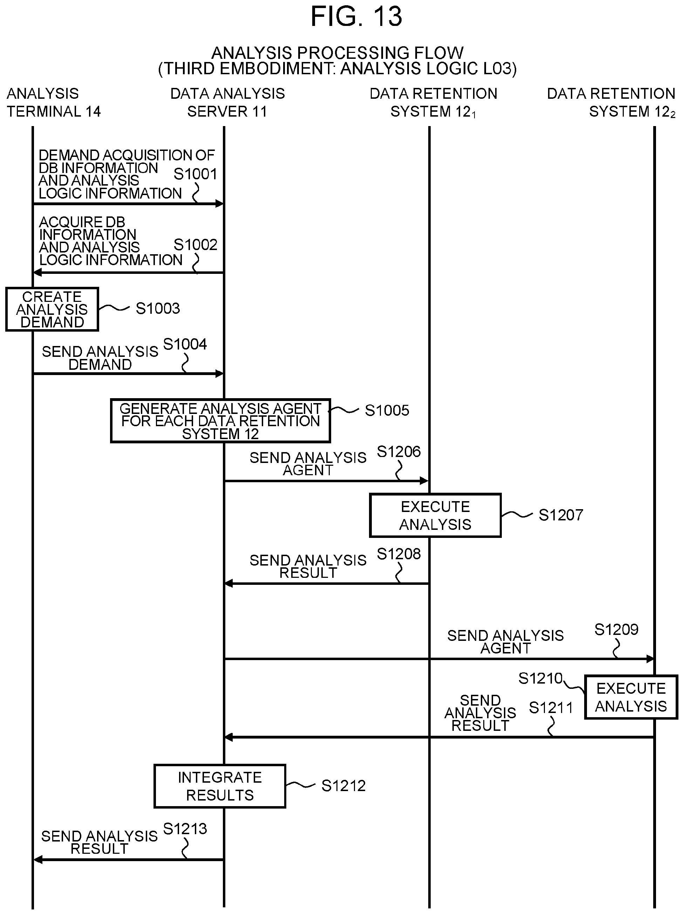

   Fig. 13 is a diagram illustrating a processing flow of the analysis step according to the third embodiment.
[Fig. 14]

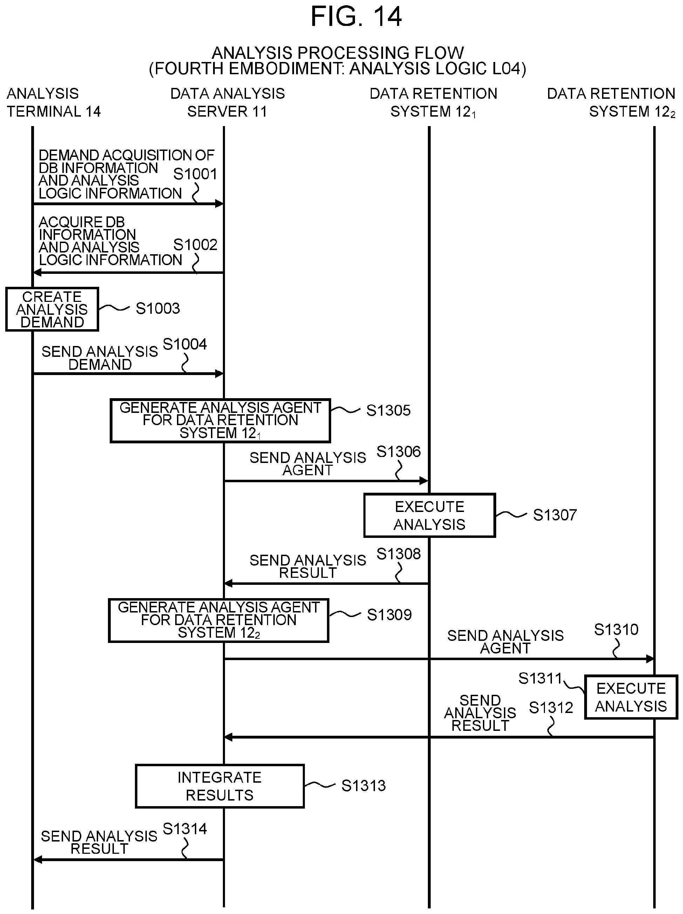

   Fig. 14 is a diagram illustrating a processing flow of the analysis step according to the fourth embodiment.
[Fig. 15]

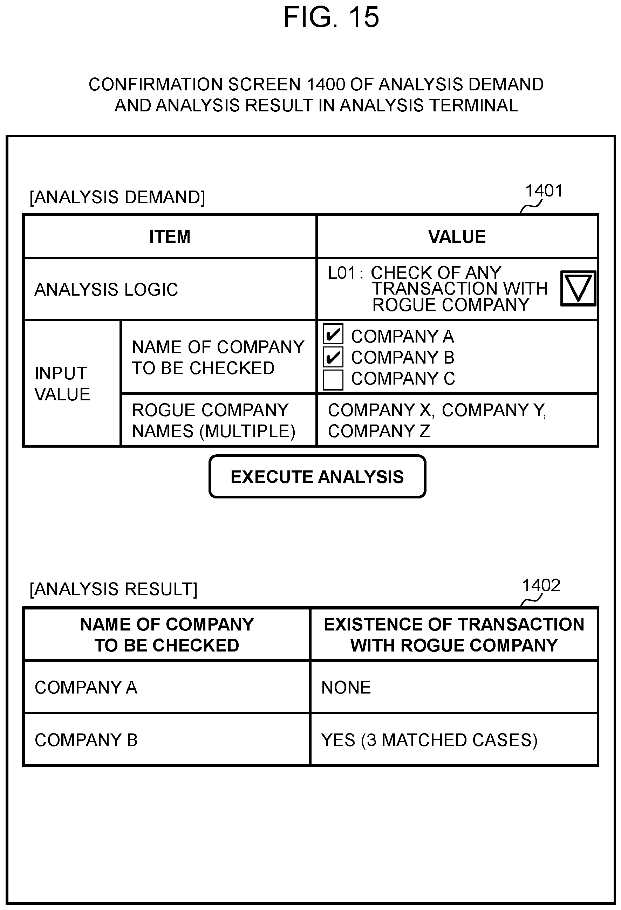

   Fig. 15 is a diagram illustrating a display screen of the analysis demand and the analysis result output by the analysis terminal in the analysis step according to the first embodiment.

### DESCRIPTION OF EMBODIMENTS

A preferred embodiment of the present invention is now explained. In the following explanation, the same reference numeral is assigned to the same or similar elements and processing, and redundant explanation will be omitted. Moreover, in the later embodiments, only the differences in comparison to the previous embodiments will be explained, and redundant explanation will be omitted.

Moreover, the explanation of the following embodiments and the configuration and processing illustrated in the respective drawings show the summary of the embodiments to the extent required for the understanding and working of the present invention, and are not intended to limit the present invention to the embodiments. Moreover, a part of all of the respective embodiments and the respective modified examples may be combined to the extent that they do not deviate from the subject matter of the present invention and are consistent with each other.

### [First embodiment]

### <Configuration of data analysis system S according to first embodiment

Fig. 1 is a diagram illustrating a configuration of the data analysis system S according to the first embodiment. The data analysis system S of this embodiment is configured by including, as illustrated in Fig. 1, analysis terminals 14₁ to 14_{M} which perform data analysis of data held by other organizations (hereinafter collectively referred to as the "analysis terminal 14"), data retention systems 12₁ to 12_{L} which retain data containing confidential information (hereinafter collectively referred to as the "data retention system 12"), a data analysis server 11 which is a platform that enables the data analysis by the analysis terminal 14 by mediating the exchange between the analysis terminal 14 and the data retention system 12, analysis logic creation terminals 13₁ to 13_{N} which create an analysis logic that can be executed by the analysis terminal 14 and register the created analysis logic in the data analysis server 11 (hereinafter collectively referred to as the "analysis logic creation terminal 13"), and a network 15.

Let it be assumed that each data retention system 12 is being managed by a different organization. Moreover, each analysis logic creation terminal 13 may belong to the same organization as the organization that is managing the data retention system 12, or belong to an organization that is different from the organization that is managing the data retention system 12. Similarly, each analysis terminal 14 may belong to the same organization as the organization that is managing the data retention system 12, or belong to an organization that is different from the organization that is managing the data retention system 12. While it is assumed that the data analysis server 11 will be managed by an organization that is different from the organizations managing the other devices, it may also be managed by the same organization as the organization that is managing any other device.

Note that, in the present specification, the range that the same data disclosure policy is applied is referred to as an "organization". Thus, data retained by an "organization" is not disclosed outside the range to which the same data disclosure policy does not apply.

The respective devices configuring the data analysis system S of Fig. 1 are now explained.

The data analysis server 11 is foremost explained with reference to Fig. 2. Fig. 2 is a diagram illustrating an internal configuration of the data analysis server 11 shown in Fig. 1. The data analysis server 11 includes a processing unit 20a, a storage unit 20b, a communication unit 20c for communicating with other devices via the network 15, and an I/O unit 20d which receives instructions from a user of the data analysis server 11 and displays an analysis result to the user.

The processing unit 20a includes a DB information management unit 21 which receives a DB (Data Base) information registration request that is sent from the data retention system 12 and registers DB information in the DB information management TBL (Table) retention unit 25, an analysis logic management unit 22 which receives an analysis logic registration request that is sent from the analysis logic creation terminal 13 and registers an analysis logic in the analysis logic TBL retention unit 26, an analysis unit 23 which performs processing related to data analysis based on the analysis demand sent from the analysis terminal 14, and a control unit 24 which integrally controls the respective units of the data analysis server 11.

The storage unit 20b includes a DB information management TBL retention unit 25 which retains a DB information management table 800 (described later with reference to Fig. 9) that stores the DB information to be registered from the data retention system 12, an analysis logic TBL retention unit 26 which retains an analysis logic table 900 (described later with reference to Fig. 10) that stores information of the analysis logic to be registered from the analysis logic creation terminal 13, and an analysis logic retention unit 27 which retains agent information such as an execution file required for executing the analysis logic.

The data retention system 12 is now explained with reference to Fig. 3. Fig. 3 is a diagram illustrating an internal configuration of the data retention system 12 shown in Fig. 1. The data retention system 12 includes a processing unit 30a, a storage unit 30b, a communication unit 30c for communicating with other devices via the network 15, and an I/O unit 30d which receives instructions from a user of the data retention system 12 and displays an analysis result to the user.

The processing unit 30a includes a DB information management unit 31 which manages the data stored in the data retention unit 34 and registers DB information in the data analysis server 11, an analysis unit 32 which performs data analysis of the data retention unit 34 by executing the analysis agent received from the data analysis server 11, and a control unit 33 which integrally controls the respective units of the data retention system 12.

The storage unit 30b includes a data retention unit 34 which retains data containing confidential data managed by the data retention system 12. Fig. 4 is a diagram illustrating the data retained by the data retention system 34 shown in Fig. 3. The data retention unit 34 stores a database table T1 as shown in Fig. 4. The database table T1 stores data of each organization such as a company. In the example shown in Fig. 4, the database table T1 includes a column T11 which stores a transaction date/time, a column T12 which stores a business partner name, a column T13 which stores a name of the purchased item, and a column T14 which stores information of quality.

The analysis logic creation terminal 13 is now explained with reference to Fig. 5. Fig. 5 is a diagram illustrating an internal configuration of the analysis logic creation terminal 13 shown in Fig. 1. The analysis logic creation terminal 13 includes a processing unit 40a, a storage unit 40b, a communication unit 40c for communicating with the other devices via the network 15, and an I/O unit 40d which receives instructions from a user of the analysis logic creation terminal 13 and displays an analysis result to the user.

The processing unit 40a includes a DB information management unit 41 which acquires DB information from the data analysis server 11, and stores the acquired DB information in the DB information management TBL retention unit 44, an analysis logic creation unit 42 which creates an analysis logic with reference to the DB information stored in the DB information management TBL retention unit 44, and a control unit 43 which integrally controls the respective units of the analysis logic creation terminal 13.

The storage unit 40b includes a DB information management TBL retention unit 44 which manages the DB information acquired from the data analysis server 11, and an analysis logic retention unit 45 which stores the analysis logic created by the analysis logic creation unit 42.

The analysis terminal 14 is now explained with reference to Fig. 6. Fig. 6 is a diagram illustrating an internal configuration of the analysis terminal 14 shown in Fig. 1. The analysis terminal 14 includes a processing unit 50a, a storage unit 50b, a communication unit 50c for communicating with the other devices via the network 15, and an I/O unit 50d which receives instructions from a user of the analysis terminal 14 and displays an analysis result to the user.

The processing unit 50a includes a DB information and analysis logic management unit 51 which acquires DB information and an analysis logic from the data analysis server 11, stores the acquired DB information and analysis logic in the DB information management TBL retention unit 54 and the analysis logic retention unit 55 and manages the stored DB information and analysis logic, an analysis demand creation and result management unit 52 which utilizes the foregoing information and creates a specific analysis demand and receives, displays and manages the created analysis result, and a control unit 53 which integrally controls the respective units of the analysis terminal 14.

The storage unit 50b includes a DB information management TBL retention unit 54 which manages the DB information acquired from the data analysis server 11, an analysis logic retention unit 55 which stores the analysis logic acquired from the data analysis server 11, and an analysis demand and analysis result retention unit 56 which retains the analysis demand created by the analysis terminal 14 and the analysis result acquired from the data analysis server 11.

Fig. 7 is a diagram illustrating a hardware configuration of the data analysis server 11, the data retention system 12, the analysis logic creation terminal 13, and the analysis terminal shown 14 in Fig. 1. Each of these devices is realized by programs being executed based on the coordination of a CPU 64 and a memory 65 in a computer 60 configured by a communication device 61, an I/O device 62 including an input unit such as a keyboard and a display unit such as a display, a storage device 63 such as a storage, a CPU 64, and a memory 65 such as a RAM being connected with an internal communication line 66 such as a bus.

The processing flow in the data analysis system S of this embodiment is now explained. The processing flow described below is executed by the respective processing units which are realized in each device configuring the data analysis system S by the respective programs stored in the storage device being loaded into the memory of each of the data analysis server 11, the data retention system 12, the analysis logic creation terminal 13, and the analysis terminal 14 and being executed by the CPU. Moreover, the respective programs may also be stored in the storage device in advance. Moreover, the respective programs may be installed as needed, such as by being recorded in a non-temporary portable recording medium in advance and read from a portable recording medium by a medium-readable device, or being acquired from a non-temporary storage device of another device via a communication medium (network or carrier waves that propagate along a network).

The processing performed in the data analysis system S according to this embodiment is configured from two steps; namely, an analysis logic registration step of registering the DB information and the analysis logic from the data retention system 12 or the analysis logic creation terminal 13 in the data analysis server 11 in advance, and an analysis step of performing the actual analysis by utilizing the information registered in the analysis logic registration step.

### <Analysis logic registration step in data analysis system S according to first embodiment>

The processing flow of the analysis logic registration step in the data analysis system S according to the first embodiment is now explained with reference to Fig. 8. Fig. 8 is a diagram illustrating an analysis logic registration flow according to the first embodiment.

Foremost, the data retention system 12 accesses the data analysis server 11, and registers the DB information of the data retained by the data retention system 12 in the data analysis server 11 (step S701 and step S702 (indicated as S701 and S702; hereinafter the same)). The data analysis server 11 retains the DB information registered from the data retention system 12 in the DB information management table 800 retained by the DB information management TBL retention unit 25, and thereby renews the table renewal (S703).

The table configuration of the DB information management table 800 which manages the DB information according to the first embodiment is now explained with reference to Fig. 9. Fig. 9 is a diagram illustrating a table configuration of the DB information management table 800 retained by the data analysis server 11 in the data analysis system S according to the first embodiment.

The DB information management table 800 is configured by including a data retention system name 801 which indicates the name of the data retention system 12 that registered the DB information, a data retention system attribute 802 as the attribute information of the data retention system 12, an item name 803 which indicates the item name of the data retained by the data retention system 12, an overview 804 indicating the explanation of each item, a format 805 which indicates the format information of each item, and a requirement 806 which indicates the requirement of each item.

The data retention system attribute 802 can also describe, for example, information regarding the business category of the company that owns by the data retention system 12, type of data retained by the data retention system 12, and information regarding the number of employees or territory of the company that owns the data retention system 12, or describe other information.

The item name 803 corresponds to the column name of the database table held by each data retention system 12. When the data retention system 12 in which the data retention system name 801 is "data retention system A (Company A)" is storing the database table T1 illustrated in Fig. 4, as shown in Fig. 9, the DB information management table 800 is associated with the "data retention system A (Company A)" and each name of the columns T11 to T14 of the database table T1 is stored in the item name 803.

Moreover, the requirement 806 describes the requirement to be satisfied when analyzing the item. The requirement 806 is, for example, not outputting confidential data containing at least one among "personal information", "sensitive information", "corporate secret information", "inferable privacy information" and the like to the outside of the data retention system 12. For example, when information which reveals the relationship of the name of the data retention system 12 and the business partner name corresponds to confidential information for the company that owns the data retention system 12, the fact that such relationship is not included in the analysis result is described as the requirement.

The requirement 806 may also be described, as shown in Fig. 9, by designating the output prohibited range and/or the output permitted range. For example, when prescribing as the requirement that the information which reveals the relationship of the name (data retention system A) of the data retention system 12 and the business partner name is not output, 'relationship of the "data retention system A" and the "business partner name'" is described as the "output prohibited range". Moreover, for example, when prescribing as the requirement that the name of the data retention system 12 may be output when the name (data retention system A) of the data retention system 12 is anonymized, 'output is permitted when the name of the "data retention system A" is anonymized' is described as the "output permitted range". Cases of abstracting data is the same as cases of anonymizing data.

Note that, in Fig. 9, the data group associated with one data retention system name 801 is the DB information of one data retention system 12. Each data retention system 12 sends the DB information registered from its own system to the data analysis server 11 as shown in S701 and S702.

Returning to the explanation of Fig. 8, in the analysis logic registration flow, the analysis logic creation terminal 13 accesses the data analysis server 11 (S704), acquires the DB information described in the DB information management table 800, and stores the acquired DB information in the DB information management TBL retention unit 44 of the analysis logic creation terminal 13 (S705).

The analysis logic creation terminal 13 utilizes the acquired DB information and creates an analysis logic which realizes the analysis to be executed (S706). Specifically, when the user of the analysis logic creation terminal 13 considers how the data items retained by each data retention system 12 can be utilized so as to realize the analysis to be executed while referring to the DB information, the user uses the analysis logic creation unit 42 to create a logic, and stores the created analysis logic in the analysis logic retention unit 45.

The analysis logic creation terminal 13 sends the analysis logic created in S706 to the data analysis server 11, and requests the registration of the analysis logic (S707).

The data analysis server 11 that received the registration request of the analysis logic examines the contents of the analysis logic (S708). Specifically, the user of the data analysis server 11 visually confirms the details of the analysis logic for which registration was requested, and confirms whether the contents of the analysis logic satisfy the requirement described in the requirement 806 of the DB information management table 800. When the contents of the analysis logic satisfy the requirement, the user of the data analysis server 11 inputs a message to the effect that the registration of the analysis logic in the data analysis server 11 is permitted, and when the contents of the analysis logic do not satisfy the requirement, the user of the data analysis server 11 inputs a message to the effect that the registration of the analysis logic in the data analysis server 11 is not permitted.

Note that, in S708, the data analysis server 11 may also automatically determine whether the analysis logic for which registration was requested satisfies the requirement described in the requirement 800 of the DB information management table 800 in lieu of the user's visual confirmation of the analysis logic. For example, the satisfaction of the requirement may be determined based on computer processing by encoding or formulizing the requirement.

The data analysis server 11 performs the registration processing of the analysis logic when registration is permitted in the examination result of S708 (S709). Specifically, the data analysis server 11 adds information of the analysis logic to the analysis logic table 900 retained by the analysis logic TBL retention unit 26, and stores the execution file of the analysis logic in the analysis logic retention unit 27.

The table configuration of the analysis logic table 900 according to the first embodiment is now explained with reference to Fig. 10. Fig. 10 is a diagram illustrating a table configuration of the analysis logic table 900 retained by the data analysis server 11 in the data analysis system S according to the first embodiment.

The analysis logic table 900 is configured by including an analysis logic ID901 which is an identifier of the analysis logic, an analysis logic name 902 which is the name of the analysis logic, an analysis logic overview 903 which explains the processing contents of the analysis logic, an input 904 which indicates the input value required for the analysis logic, an output 905 which indicates the output value that can be obtained as a result of executing the analysis logic, and a function 906 which indicates the execution program of the analysis logic.

In the final step of the analysis logic registration flow, the data analysis server 11 sends the registration result of the analysis logic to the analysis logic creation terminal 13 (S710). Specifically, the data analysis server 11 sends a message to the effect that registration is not permitted when it is determined that registration is not permitted in S708, and sends a message to the effect that registration is permitted and registration is complete when registration is permitted in S708 and the registration was executed without incident in S709.

### <Processing flow of analysis step of first embodiment>

Fig. 11 is a diagram illustrating a processing flow of the analysis step according to the first embodiment. Fig. 11 is an example of the processing flow, as the first embodiment of the analysis step in the data analysis system S, when the analysis logic of the analysis logic ID "L01" (check of any transaction with rogue company) is executed among the four analysis logics illustrated in Fig. 10. The analysis logic of this embodiment is a pattern of sending the same type of analysis demand (analysis agent) to one or more data retention systems 12, and sending the analyzed result to the analysis terminal 14.

In the analysis logic of the analysis logic ID "L01" of Fig. 10, the execution file "L01-01" of distribution described in the function 906 is the execution file corresponding to the logic described in the analysis logic overview 903. The analysis agent generated based on the execution file "L01-01" of distribution is sent, together with the required parameters, to the target data retention system 12.

Foremost, the analysis terminal 14 accesses the data analysis server 11 (S1001), and acquires the DB information and the analysis logic information (S1002). The analysis terminal 14 stores the acquired DB information in the DB information management TBL retention unit 54, and stores the analysis logic information in the analysis logic retention unit 55.

The analysis terminal 14 utilizes the acquired DB information and analysis logic information and creates an analysis demand (S1003). Specifically, the user of the analysis terminal 14 selects the analysis logic to be executed and decides what kind of value should be set as the input value of the selected analysis logic while referring to the DB information and the analysis logic information, and creates a telegram of the analysis demand by using the analysis demand creation and result management unit 52. The analysis terminal 14 sends the analysis demand created in S1003 to the data analysis server (S1004).

When the data analysis server 11 receives the analysis demand from the analysis terminal 14, the data analysis server 11 generates the analysis agent that can be executed by each data retention system 12 of the destination based on the analysis demand (S1005).

For example, in the case of the analysis logic ID "L01" of Fig. 10, it is necessary to send an analysis demand to a plurality of data retention systems 12 on whether any of the company names included in the list of the rogue company names set as an input of the analysis demand matches those included in the data of the data retention system 12. Thus, as the analysis demand to each data retention system 12, generated is an analysis agent which searches for whether any of the company names included in the list of the rogue company names is included in the database of the data retention system 12, and returns the search result.

Note that, since there may be cases where the DB configuration of each data retention system 12 is different, which item of the database of each data retention system 12 should be searched is determined, and each analysis agent is generated so as to match the database configuration of each data retention system 12. As a result of adopting the foregoing configuration, even when the DB configuration of each data retention system 12 is different, data analysis can be performed by the analysis agent.

The data analysis server 11 sends the analysis agent, which is the analysis demand generated in S1005, to the data retention system 12₁ and the data retention system 12₂ to be analyzed (S1006, S1010).

When the data retention system 12₁ and the data retention system 12₂ receive the analysis agent from the data analysis server 11, they perform the analysis by causing the analysis unit 32 to execute the analysis agent (S1007, S1011). Specifically, the analysis agent executes the following processing to the database table T1 (see Fig. 4) stored in the data retention unit 34.

For example, the analysis agent searches the "business partner name" column in the database table T1 of the data retention system 12 of a certain organization based on the search keys of "Company X", "Company Y" and "Company Z" as the rogue company names set in the analysis terminal 14. In the case of the example of the database table T1 of Fig. 4, since the record of the third line matches the rogue company name of "Company X", the analysis agent acquires the result that there is one match in the analysis on whether there is any transaction between the organization and the rogue companies ("Company X", "Company Y", "Company Z"). The analysis agent sends the acquired result to each data analysis server 11 (S1008, S1012).

The data analysis server 11 sends the analysis result received from the data retention system 12 to each analysis terminal 14 (S1009, S1013).

Note that the number of data retention systems 12 as the destination of the analysis agent is not limited to two data retention systems 12, and may also be three or more data retention systems 12.

According to the analysis step of the first embodiment, while the analysis terminal 14 that received the analysis result is able to comprehend, for example, whether or not each data retention system 12 conducted a transaction with a rogue company recorded in the list of rogue company names, it is unable to know specifically with which rogue company the transaction was conducted. In other words, by registering an analysis logic of not providing confidential data outside the organization in the analysis logic registration flow, and sending the analysis logic to each data retention system 12 and receiving an analysis result as the execution result of the analysis logic in each data retention system 12 in the analysis processing flow, the confidential data can be analyzed without providing the confidential data from the data retention system 12 to the outside.

In other words, according to this embodiment, a data analyst can analyze data containing confidential data without having to provide the confidential data retained by another organization, which is different from the organization with which the data analyst is affiliated, from such other organization to the outside. Moreover, it is possible to offer user-friendliness of data analysis while reducing the risk of divulging confidential data from an organization to the outside when performing data analysis to the data retained by that organization.

Note that the number of data retention systems 12 to be analyzed may be one data retention system 12. Even in the foregoing case, confidential data can be analyzed without providing the confidential data from the data retention system 12 to the outside based on a similar scheme.

### [Second embodiment]

### <Processing flow of analysis step of second embodiment

Fig. 12 is a diagram illustrating a processing flow of the analysis step according to the second embodiment. Fig. 12 is an example of the processing flow, as the second embodiment of the analysis step in the data analysis system S, when the analysis logic of the analysis logic ID "L02" (aggregation of quality evaluation of specified company) is executed among the four analysis logics illustrated in Fig. 10. The analysis logic of this embodiment is a pattern of sending the same type of analysis demand (analysis agent) to two or more data retention systems 12, integrating the analyzed results with the data analysis server 11, and then sending the integrated analysis result to the analysis terminal 14.

In the analysis logic of the analysis logic ID "L02" of Fig. 10, the execution file "L02-01" of distribution described in the function 906 is the execution file corresponding to the "logic L02-1" described in the analysis logic overview 903, and the execution file "L02. INTEGRATE" of integration is the execution file corresponding to the "logic L02-2" described in the analysis logic overview 903. The analysis agent generated based on the execution file "L02-01" of distribution is sent, together with the required parameters, to the target data retention system 12. The execution file "L02. INTEGRATE" of integration is executed in the data analysis server 11 when performing integration analysis processing to the analysis result acquired from each data retention system 12, to which the analysis demand obtained by dividing the analysis demand from the analysis terminal 14 is to be sent.

The difference between the first embodiment and the second embodiment is that the data analysis server 11 integrates the analysis results from a plurality of data retention systems 12 and then sends the integrated analysis result to the analysis terminal 14. Specifically, when the data analysis server 11 receives the analysis result from each of the data retention system 12₁ and the data retention system 12₂ (S1008, S1012), the data analysis server 11 performs integration processing to the plurality of analysis results (S1113), and sends the integrated analysis result to the analysis terminal 14 (S1114).

Note that the number of data retention systems 12 as the destination of the analysis agent is not limited to two data retention systems 12, and may also be three or more data retention systems 12.

According to the second embodiment, while the analysis terminal 14 that received the analysis result is able to collectively, and not individually, comprehend, for example, the evaluation of the company to be analyzed (data retention system 12) of a specified company, it is unable to know specifically with which company to be analyzed (data retention system 12) the transaction was conducted by the specified company. In other words, by integrating the analysis results of the plurality of companies to be analyzed (data retention systems 12), confidential data can be analyzed without having to disclose the confidential data to an analyst.

### [Third embodiment]

### <Processing flow of analysis step of third embodiment>

Fig. 13 is a diagram illustrating a processing flow of the analysis step according to the third embodiment. Fig. 13 is an example of the processing flow, as the third embodiment of the analysis step in the data analysis system S, when the analysis logic of the analysis logic ID "L03" (correlation analysis of tendency of search keyword and number of transactions) is executed among the four analysis logics illustrated in Fig. 10. The analysis logic of this embodiment is a pattern of sending different types of analysis demands (analysis agents) to two or more data retention systems 12 in a predetermined order, integrating the analysis results with the data analysis server 11, and sending the integrated analysis result to the analysis terminal 14.

In the analysis logic ID "L03" of Fig. 10, the execution file "L03-01" of distribution described in the function 906 is the execution file corresponding to the "logic L03-1" described in the analysis logic overview 903, the execution file "L03-02" of distribution is the execution file corresponding to the "logic L03-2" described in the analysis logic overview 903, and the execution file "L03. INTEGRATE" of integration is the execution file corresponding to the "logic L03-3" described in the analysis logic overview 903. The analysis agent generated based on the execution files "L03-01" "L03-02" of distribution is sent, together with the required parameters, to the target data retention system 12. The execution file "L03. INTEGRATE" of integration is executed in the data analysis server 11 when integrating and performing integration analysis processing to the analysis results acquired from each data retention system 12, to which the analysis demand obtained by dividing the analysis demand from the analysis terminal 14 is to be sent.

The difference between the first embodiment and the second embodiment, and the third embodiment, is that the analysis performed by the analysis agent to be sent by the data analysis server 11 to each data retention system 12 differs according to the destination. Specifically, in response to the analysis logic of the analysis logic ID "L03" being selected in the processing of S1003 of the analysis terminal 14, the data analysis server 11 sends, to the data retention system 12₁, the analysis agent generated based on the execution file "L03-01" in the processing of S1005 as the analysis demand to be sent to the data retention system 12₁ (S1206), and sends, to the data retention system 12₂, the analysis agent generated based on the execution file "L03-02" in the processing of S1005 as the analysis demand to be sent to the data retention system 12₂ (S1209).

Each data analysis server 11 executes the analysis in each data retention system 12 according to each analysis demand (S1207, S1210), and acquires the analysis result (S1208, S1211). The data analysis server 11 acquires the analysis results from each data retention system 12, and integrates the analysis results (S1212). Subsequently, the data analysis server 11 sends the integrated analysis result to the analysis terminal 14 (S1213).

Note that the number of data retention systems 12 as the destination of the analysis agent is not limited to two data retention systems 12, and may also be three or more data retention systems 12.

According to the third embodiment, while the analysis terminal 14 that received the analysis result can comprehend, for example, the correlation of the tendency of a search keyword of a specified region and the number of transactions of companies in a specified region in relation to the search keyword, it is unable to comprehend the search keyword of a specified individual or the number of transactions of a specified company. In other words, as a result of the data retention system 12 performing analysis processing and integrating the analysis results thereof, confidential data can be analyzed without having to disclose the confidential data to an analyst.

### [Fourth embodiment]

### <Processing flow of analysis step of fourth embodiment

Fig. 14 is a diagram illustrating a processing flow of the analysis step according to the fourth embodiment. Fig. 14 is an example of the processing flow, as the fourth embodiment of the analysis step in the data analysis system S, when the analysis logic of the analysis logic ID "L04" (target analysis of rogue companies) is executed among the four analysis logics illustrated in Fig. 10. The analysis logic of this embodiment is a pattern of sending one among the different types of analysis demands (analysis agents) to the target data retention system 12, sending another analysis demand (analysis agent) to another data retention system 12 based on the analysis result, integrating and performing analysis processing to the analysis results of the other data retention system 12 with the data analysis server 11, and sending the integrated analysis result to the analysis terminal 14.

In the analysis logic ID "L04" of Fig. 10, the execution file "L04-01" of distribution described in the function 906 is the execution file corresponding to the "logic L04-1" described in the analysis logic overview 903, the execution file "L04-02" of distribution is the execution file corresponding to the "logic L04-2" described in the analysis logic overview 903, and the execution file "L04. Integrate" of integration is the execution file corresponding to the "logic L04-3" described in the analysis logic overview 903. The analysis agent generated based on the execution files "L04-01" "L04-02" of distribution is sent, together with the required parameters, to the target data retention system 12. The execution file "L04. Integrate" of integration is executed in the data analysis server 11 when integrating and performing integration analysis processing to the analysis results acquired from each data retention system 12, to which the analysis demand obtained by dividing the analysis demand from the analysis terminal 14 is to be sent.

The difference between the first embodiment and the second embodiment and the third embodiment, and the fourth embodiment, is that the analysis performed by the analysis agent to be sent by the data analysis server 11 differs according to the data retention system 12 of the destination, and the analysis agent is generated as the next analysis demand based on one analysis result and sent to the next data retention system 12. Specifically, in response to the analysis logic of the analysis logic ID "L04" being selected in the processing of S1003 of the analysis terminal 14, the data analysis server 11 sends, to the data retention system 12₁, the analysis agent generated based on the execution file "L04-01" in the processing of S1005 as the analysis demand to be sent to the data retention system 12₁ (S1306), the data retention system 12₁ executes the analysis based on the analysis agent (S1307), and receives the analysis result thereof (S1308). Subsequently, in the processing of S1309, the data analysis server 11 generates the analysis agent to the next data retention system 12₂ based on the analysis result received in S1308 and the execution file "L04-02" (S1310), and the data retention system 12₂ executes the analysis based on the analysis agent (S1311), and receives the analysis result thereof (S1312).

The data analysis server 11 integrates and performs analysis processing to the analysis result acquired from the data retention system 12₂ (S1313). Subsequently, the data analysis server 11 sends the integrated analysis result to the analysis terminal 14 (S1314).

Note that the number of data retention systems 12 as the destination of the analysis agent is not limited to two data retention systems 12, and may also be three or more data retention systems 12. For example, when there are three data retention systems 12, added is the processing of generating and sending an analysis logic to the third data retention system 12 based on the analysis result of the second data retention system 12.

According to the fourth embodiment, while the analysis terminal 14 that received the analysis result can comprehend, for example, suspicious company names and companies having what kind of characteristics become an easy target, it is unable to know which specific company has conducted a transaction with a suspicious company. In other words, as a result of the data retention system 12 performing analysis processing and succeeding and integrating the analysis results thereof, confidential data can be analyzed without having to disclose the confidential data to an analyst. Note that the access terminal 14 that acquired information on companies having what kind of characteristics become an easy target can prevent transactions with suspicious companies by providing such information to a company group (business category) having similar characteristics.

### <Display screen 1400 of analysis demand and analysis result according to this embodiment>

Fig. 15 is a diagram illustrating a display screen 1400 of the analysis demand and the analysis result output by the analysis terminal 14 in the analysis step according to the first embodiment. Fig. 15 shows an output example in the first embodiment. The display screen 1400 is configured by including an analysis demand screen 1401 and an analysis result screen 1402.

When the analysis terminal 14 accesses the data analysis server 11 and acquires the DB information and the analysis logic information (see S1001, S1002 (Fig. 11)), the analysis demand screen 1401 is displayed on a display unit. The user of the analysis terminal 14 selects the analysis logic that he/she wishes to execute from the "analysis logic" pull-down menu on the analysis demand screen 1401, and inputs, as the setting information of the analysis demand, information of the company names to be checked and the list of rogue company names as the input values of the selected analysis logic (see S1003 (Fig. 11)).

Here, when the user of the analysis terminal 14 selects the analysis logic on the analysis demand screen 1401, it is also possible to perform control so that the names of companies that can execute the analysis logic (names of companies that own the data retention system 12) are displayed in the "company names to be checked" as the input value. Whether or not the company (data retention system 12) can execute the analysis logic is determined based on the requirement 806 described in the DB information management table 800. In other words, the company that can execute the analysis logic is a company in which the output, when the analysis logic is executed, satisfies each requirement 806 related to the confidential information of the company (data retention system 12) described in the DB information management table 800.

When the analysis execution button on the analysis demand screen 1401 is thereafter pressed, an analysis demand is sent from the analysis terminal 14 to the data analysis server 11 (see S1004 (Fig. 11)). When the analysis terminal 14 receives the analysis result in response to the sent analysis demand, the analysis result is displayed on the analysis result screen 1402 of the analysis terminal 14. In the example of Fig. 15, whether or not there was any transaction with the rogue companies (Company X, Company Y, Company Z) in relation to Company A and Company B set as the input values is displayed. As illustrated in the analysis result screen 1402 of Fig. 15, the number of rogue companies with which transactions were actually conducted is displayed among all rogue companies in which the existence of transactions was checked with regard to the companies to be checked.

With the display screen 1400 in the second embodiment to the fourth embodiment, as with the display screen 1400 in the first embodiment, the "input value" on the analysis demand screen 1401 is an item according to the respective inputs 904 of the logic IDs "L02", "L03", L04" in the analysis logic table 900, and the output items of the analysis result screen 1402 are the items according to the respective outputs 905 of the logic IDs "L02", "L03", L04" in the analysis logic table 900.

As a result of realizing the foregoing configuration, routine and data structure, data analysis targeting data containing confidential data is enabled without having to provide the confidential data retained in the data retention system 12 to the outside from the data retention system 12, and the risk of divulging confidential data can be alleviated. Since it is thereby possible to utilize data of a broader range and perform safe analysis in comparison to conventional technologies, new services can be consequently created.

Note that the present invention is not limited to the embodiments described above, and includes various modified examples. For example, the foregoing embodiments were explained in detail for explaining the present invention in an easy-to-understand manner, and the present invention is not necessarily limited to a type which comprises all of the configurations explained in the embodiments. Moreover, to the extent that there is no contradiction, a part of the configuration of a certain embodiment may be replaced with the configuration of another embodiment, and the configuration of another embodiment may be added to the configuration of one embodiment. Furthermore, a part of the configuration of each embodiment may undergo addition, deletion, replacement, integration or distribution of another configuration. Moreover, the configuration and processing described in the embodiments described above may undergo distribution, integration or replacement as needed in light of processing efficiency or mounting efficiency. Furthermore, the various types of data illustrated in the embodiments are not limited to a table format, and may also be data of other formats.

For example, some or all of the first to fourth embodiments described above may be combined. Moreover, while the foregoing first to fourth embodiments sent an analysis agent from the data analysis server 11 to the data retention system 12, the configuration is not limited thereto. For example, the configuration may also be such that the analysis terminal 14 sends some kind of analysis demand to the data retention system 12, and acquires the analysis result of the analysis processing executed by the data retention system 12 according to the analysis demand.

### REFERENCE SIGNS LIST

S: data analysis system, 11: data analysis server, 12, 12₁, 12₂, ..., 12_{L}: data retention system, 13, 13₁, ..., 13_{N}: analysis logic creation terminal, 14, 14₁, ..., 14_{M}: analysis terminal, 1400: display screen, 1401: analysis demand screen, 1402: analysis result screen

## Claims

1. A data analysis system including a data analysis server, a data retention system which retains data to be analyzed, and an analysis terminal, wherein
the data analysis server:
sends to the data retention system, according to an analysis demand from the analysis terminal, an analysis request of the data based on a requirement to be satisfied by analysis of the data; and
sends to the analysis terminal an analysis result of the data based on the requirement received from the data retention system; and
the data retention system:
analyzes the data based on the requirement according to the analysis request and
sends an analysis result to the analysis terminal.

2. The data analysis system according to claim 1, wherein
the data analysis server:
generates an analysis agent which analyzes the data based on the requirement according to an analysis demand from the analysis terminal and outputs an analysis result;
sends the generated analysis agent to the data retention system;
receives, from the data retention system, an analysis result of the data analyzed by the analysis agent; and
sends the received analysis result to the analysis terminal; and
the data retention system:
analyzes the data based on the requirement by executing the analysis agent received from the data analysis server, and sends an analysis result to the analysis terminal.

3. The data analysis system according to claim 2, wherein
the data analysis server:
when generating the analysis agent to be sent to the data retention system, determines to which data item of the data retention system a data item to be analyzed corresponds, and generates the analysis agent so as to search the corresponding data item of the data retention system.

4. The data analysis system according to claim 2, further including:
an analysis logic creation terminal, wherein
the data analysis server:
when an analysis logic, which was created by the analysis logic creation terminal, to be used when the data retention system executes the analysis agent and analyzes the data satisfies the the requirement, registers, in its own device, the analysis logic and an execution file of the analysis logical to be used when creating the analysis agent.

5. The data analysis system according to claim 4, wherein
the data analysis server:
registers the analysis logic, together with the requirement satisfied by the analysis logic, in its own device.

6. The data analysis system according to claim 4, wherein
the data analysis server:
determines whether the analysis logic satisfies the requirement.

7. The data analysis system according to claim 4, wherein
a target of the analysis demand includes a plurality of the data retention systems;
the data analysis server:
sends the generated analysis agent to each of the plurality of data retention systems; receives an analysis result of each data retained in each data retention system analyzed by the analysis agent;
integrates the received analysis results of the data; and
sends the integrated analysis result to the analysis terminal.

8. The data analysis system according to claim 7, wherein
each analysis agent to be sent to each of the plurality of data retention systems is based on a same analysis logic.

9. The data analysis system according to claim 7, wherein
each analysis agent to be sent to each of the plurality of data retention systems is based on a different analysis logic according to each data retention system.

10. The data analysis system according to claim 4, wherein
a target of the analysis demand includes a plurality of the data retention systems; and the data analysis server:
generates a second analysis agent to be sent to a second data retention system based on an analysis result of first data retained by a first data retention system analyzed by a first analysis agent sent precedingly to a first data retention system;
send the generated second analysis agent to the second data retention system;
receives an analysis result of the second data retained by the second data retention system analyzed by the second analysis agent;
performs integration processing based on the received analysis result of the second data; and
sends a processing result of the integration processing to the analysis terminal.

11. The data analysis system according to claim 1, wherein
the requirement is to not output, outside the data retention system, confidential data including at least one among personal information, sensitive information, corporate secret information, and inferable privacy information retained by the data retention system.

12. The data analysis system according to claim 4, wherein
an analysis demand screen which receives an analysis demand including an input of a selection of the analysis logic and an input value corresponding to the analysis logic, and an analysis result screen which displays an analysis result of the data according to the analysis received on the analysis demand screen are displayed on a display unit.

13. The data analysis system according to claim 12, wherein
when the analysis logic is selected in the analysis demand screen, the data retention system capable of executing the analysis logic based on the requirement in the corresponding input value is displayed selectably as an analysis target.

14. A data analysis method to be executed by a data analysis system including a data analysis server, a data retention system which retains data to be analyzed, and an analysis terminal, wherein the data analysis method includes each processing of
the data analysis server:
sending to the data retention system, according to an analysis demand from the analysis terminal, an analysis request of the data based on a requirement to be satisfied by analysis of the data; and
sending to the analysis terminal an analysis result of the data based on the requirement received from the data retention system; and
the data retention system:
analyzing the data based on the requirement according to the analysis request and sends an analysis result to the analysis terminal.
